# EUROPÄISCHE PATENTSCHRIFT

(11) **EP 0 787 553 B1**
(45) Veröffentlichungstag und Bekanntmachung des Hinweises auf die Patenterteilung: **02.05.2001**
(21) Anmeldenummer: 97250004.5
(22) Anmeldetag: 10.01.1997
(51) Int. Cl.: B23D 45/12, B23D 45/10

(54) **Maschine zum Trennen von Rohren**
Machine for cutting up tubes
Machine pour le tronçonnage de tubes

(30) Priorität: 31.01.1996 DE 19605021
(43) Veröffentlichungstag der Anmeldung: 06.08.1997
(73) Patentinhaber: SMS Demag AG, 40237 Düsseldorf (DE)
(72) Erfinder: Esser, Karl-Josef, 41179 Mönchengladbach (DE)
(74) Vertreter: Meissner, Peter E., Dipl.-Ing.

(56) Entgegenhaltungen:
- DE-A- 4 422 935
- DE-C- 4 101 749
- PATENT ABSTRACTS OF JAPAN vol. 95, no. 5, 30.Juni 1995 & JP 07 040120 A (MITSUBISHI HEAVY IND LTD), 10.Februar 1995,

## Beschreibung

Die Erfindung betrifft eine Maschine zum Trennen von Rohren gemäß der Oberbegriffe der Patentansprüche 1 und 6 und wie aus DE-A-4 422 935 bekannt.

Die deutsche Patentschrift DE 41 01 749 C 2 beschreibt eine Maschine zum Trennen von Stahlrohren, bei der mehrere Fräserköpfe mit in Gleichlaufrichtung rotierenden Scheibenfräsern bestückt sind. Die Scheibenfräser sind an Schwenkarmen gelagert, die ihrerseits an einem Drehring gelagert sind. Der Drehring erzeugt über entsprechende Antriebsaggregate eine Dreh- bzw. Umlaufbewegung der Scheibenfräser um die Mittelachse des zu trennenden Rohres, wobei durch Anstellen der Scheibenfräser durch Verschwenken der Schwenkarme ein Vorschub der Scheibenfräser in Richtung der Rohrachse eingestellt werden kann. Die bekannte Lösung weist, insbesondere beim Trennen von großen Rechteckprofilen, Nachteile auf. Durch das gesteuerte Eintauchen der Scheibenfräser bzw. die erforderliche Radiusanpassung über den Drehwinkel ergibt sich eine sehr kompliziert zu steuernde Maschine, um konstante Schnittgeschwindigkeiten einzuhalten. Radien großer Rechteckprofile müssen mit Winkelbewegungen angesteuert werden. Auch kann das Antriebssystem nicht vorgespannt werden, so daß die Bearbeitungsgüte beschränkt ist. Das System ist aufwendig, weil neben der drehenden und der Vorschubbewegung eine Einstellung der Scheibenfräser auf Quadrat- und Rechteckprofilen erforderlich ist.

Das deutsche Patent DE 41 01 749 hat zur Aufgabe, die zuvor beschriebene Maschine zu verbessern und schlägt eine Maschine zum Trennen von Rohren vor, bei der zwei Fräserköpfe von jeweils einer in zwei orthogonalen Richtungen bewegbaren Führungseinrichtung getragen werden, wobei die orthogonalen Richtungen einander bezüglich der zentralen Maschinenlängsachse paarweise gegenüberliegend verlaufen. Jeder der Fräserköpfe weist zwei Antriebsmotore auf, und zwar für jede der beiden orthogonalen Richtungen einen separaten Motor. Durch Ansteuerung jedes einzelnen von insgesamt vier Motoren ist ein individuelles Verfahren der Fräserköpfe in vertikaler und horizontaler und in diese beiden Bewegungen überlagernden Richtungen möglich. Die Drehzahl der Scheibenfräser ist, wie deren Bewegung, über ein Programm steuerbar.

Diese Maschine zum Trennen von Rohren stellt zwar gegenüber dem eingangs beschriebenen Stand der Technik eine Verbesserung dar, doch hat auch diese Maschine Nachteile. Die Maschine ist, anders als beim eingangs geschilderten Stand der Technik, nur für den Betrieb mit zwei Scheibenfräsern geeignet, wodurch die Trenngeschwindigkeit gegenüber der vorbekannten Lösung nachteilig beschränkt ist.

Weiterhin in der Oben erwähnten DE-A-4 422 935 alle Zeichnungsfiguren, die durch die Beschreibung erläutert werden, sehen zum Trennen von Rohren vor, die als Sägeblätter ausgeführten Werkzeuge senkrecht zur Rohrachse auf einer geradlinigen Bahn zu führen. Das hat aber den Nachteil, dass an den Rohren Materialstege stehenbleiben, die in einem weiteren Sägevorgang zersägt werden, wie dies beispielsweise in Spalte 3 unten beschrieben ist. Das Trennen nichtrunder Rohre oder Profile ist bei der vorbekannten Lösung nur schwierig darzustellen, und zwar mit hohem Zeitaufwand und geringer Schneidleistung. Die vorbekannte Maschine verwendet zwei oder drei Kreissägeblätter in einer Trennebene; im Fall von vier Kreissägeblättern (Figur 4 der Entgegenhaltung) sind diese in unterschiedlichen Trennebenen angeordnet.

Der wesentliche Unterschied der erfindungsgemäßen Lösung gegenüber dieser Entgegenhaltung besteht darin, dass an dem Maschinenrahmen mindestens drei Supporte vorgesehen sind, die in jeweils aufeinander senkrecht stehenden Achsrichtungen verschiebbar sind. Die Verschiebung erfolgt dabei so, dass - bezogen auf den Umfang des Rohres - die Supporte bzw. die Kreissägeblätter gleiche Bewegungsrichtungen haben, was in der erfindungsgemäßen Walze sicherstellt, dass sich die Kreissägeblätter nicht behindern.

Erst auf diese Weise wird es möglich, ein Rohr, gleichgültig ob rund oder viereckig, aber auch Profile beliebiger Querschnitte zu trennen, ohne dass Materialstege stehenbleiben, die wie bei dem bekannten Stand der Technik in einem weiteren Arbeitsschritt entfernt werden müssen. Somit ist eine sehr schnelle effektiv arbeitende Maschinenkonstruktion geschaffen, die wirtschaftlich zum Abtrennen verschiedenartiger Rohrprofile eingesetzt werden kann.

Ausgehend von einem Stand der Technik gemäß der DE-A-4 422 935 besteht die Aufgabe der vorliegenden Erfindung darin, eine Maschine zum Trennen von Rohren vorzuschlagen, die bei individueller Anpaßbarkeit an unterschiedliche zu trennende Rohre und Profile bei kompakter Ausführung geringe Verfahrmassen aufweist und die wahlweise und bedarfsabhängig mit unterschiedlicher Anzahl von Scheibenfräsern an die verschiedenen Einsatzbedingungen anpaßbar ist.

Zur Lösung der Aufgabe wird erfindungsgemäß eine Maschine mit der Merkmals Kombination des Patentanspruchs 1, bzw. 6, vorgeschlagen.

In Abkehr von einer Maschine mit zwei in orthogonalen Richtungen bewegbaren Scheibenfräsern benutzt die vorliegende Erfindung ein Konzept, das mit mehr als zwei

Scheibenfräsern betreibbar und damit für hohe Flexibilität und große Trenngeschwindigkeit geeignet ist. Die Führungen der Supporte auf geraden Führungsbahnen in aufeinander senkrecht stehenden Achsrichtungen vereinfacht und verbessert die Funktion gegenüber der bekannten Maschine mit rotierenden Scheibenfräsern, sowohl hinsichtlich des Antriebes wie auch der Starrheit der Führungen, ohne auf den Vorteil großer Trennleistungen zu verzichten.

Wenn nach einem weiteren Merkmal der Erfindung vorgesehen ist, daß die geradlinig angetriebenen Supporte mit konstanter Geschwindigkeit und synchron verfahrbar sind, so lassen sich damit gleichmäßige Trenngeschwindigkeiten erreichen, die unmittelbar die Qualität des Trennvorganges positiv beinflussen.

In einer weiteren Ausgestaltung der Erfindung sind vier Supporte vorgesehen, die am Maschinenrahmen geführt in der ersten Achsrichtung gegen das Rohr anstellbar und in der zweiten Achsrichtung in Trennvorschubrichtung verschiebbar sind, wobei die zweiten Achsrichtungen benachbarter Supporte zueinander rechtwinklig verlaufen. Die auf diese Weise um das zu trennende 4-kant Rohr angeordneten vier Scheibenfräser sind raumsparend angeordnet. Dies wird durch die Erkenntnis möglich , daß unter 45 ° zu den jeweiligen Fräsköpfen und Scheibenfräsern in Verfahrrichtung ein Freiraum gegeben ist, der es möglich macht, die Fräsköpfe und Scheibenfräser mit unterschiedlichsten Abmessungen auf kleinstem Raum unterzubringen und durch gleichzeitiges lineares Verfahren der Scheibenfräser das 4-kant Rohr an vier Abschnitten gleichzeitig zu trennen. Die Scheibenfräser fahren dabei aus dem Bearbeitungsbereich voneinander weg, ohne gegeneinander zu stoßen. Die Linearführungen sind vorteilhaft, weil sie, anders als die bekannten rotierenden Führungen mit den Schwenkarmen, leicht herstellbar sind und die Supporte daran sauber zu führen sind. Darüberhinaus sind auch die notwendigen Antriebe für die Supporte einfach zu gestalten. Das System ist weitgehend spielfrei und von hoher Steifigkeit.

Besonders günstig und konstruktiv einfach und damit kostenvorteilhaft ist eine Lösung, bei der die in Trennvorschubrichtung wirkenden Verschiebeantriebe mindestens paarweise synchron gekoppelt sind. Dadurch wird eine exakte Abstimmung der Vorschubantriebe mechanisch vorgenommen, so daß besonders gute Trennqualitäten zu erwarten sind, ohne daß aufwendige Steuerungen einer Vielzahl von Antrieben vorgesehen werden müssen.

Vorteilhaft ist erfindungsgemäß auch die große Anpaßbarkeit der Maschine, nicht nur an quadratische Querschnitte unterschiedlicher Abmessungen, sondern auch an Rechteck- und Dreieckprofile verschiedener Größen.

Dreieckprofile lassen sich besonders günstig dann trennen, wenn nach einem anderen Merkmal der Erfindung drei Supporte vorgesehen sind, die am Maschinenrahmen geführt in der ersten Achsrichtung gegen das Rohr anstellbar und in der zweiten Achsrichtung in Trennvorschubrichtung verschiebbar sind, wobei die zweiten Achsrichtungen mindestens zweier benachbarter Supporte zueinander rechtwinklig verlaufen und mindestens der dritte Support durch zeitweise gekoppelte Überlagerung seiner Bewegungen in den beiden Achsrichtungen auf einer von der Geraden abweichenden Bahn bewegbar ist. Das Trennen erfolgt also durch zwei geradlinig bewegbare Supporte und einen dritten Support, der durch Überlagerung seiner in beiden Achsrichtungen durchgeführten Bewegung dem zu trennendenAbschnitt des Profilquerschnittes folgt.

Zum Trennen von runden oder im Querschnitt dreieckigen Profilen können auch in einer weiteren Variante der Erfindung drei Supporte vorgesehen werden, die am Maschinenrahmen geführt, in der ersten Achsrichtung gegen das Rohr anstellbar und in der zweiten Achsrichtung in Trennvorschubrichtung verschiebbar sind, wobei die zweiten Achsrichtungen benachbarter Supporte zueinander im spitzen Winkel verlaufen und der die Supporte führende Grundkörper im wesentlichen dreieckig ausgebildet ist. Diese Maschinenausbildung stellt für besondere Anwendungen eine Vereinfachung dar, ohne die Vorteile der erfindungsgemäßen Lösung, nämlich einfache Führungen, geringer Bauaufwand, einfache Antriebssysteme, hohe Steifigkeit und Vorspannung aufzugeben.

Eine Vereinfachung des Antriebes läßt sich vor allem dann erreichen, wenn für alle oder Gruppen von Supporten ein gemeinsamer Antrieb vorgesehen ist, der über Koppelgetriebe einen synchronen Trennvorschub bewirkt. So ist es möglich, mit nur einem einzigen Antriebsmotor zwei oder drei Supporte, ggf. bei kleineren Abmessungen auch alle vier Supporte in der erfindungsgemäßen Weise geradlinig zu bewegen, wobei nach einem anderen Merkmal der Erfindung als Koppelgetriebe Kugelrollspindeln mit Kegelradverzahnungen verwendet werden.

Besonders wichtig ist es, wenn durch die Erfindung vorgeschlagen wird, daß der Maschinenrahmen kastenartig kompakt ausgebildet ist und zum Austausch und Anbau baugleich ausgeführter Supporte vorbereitet ist. Entgegen der bisherigen Bauweise, spezielle Säulenführungen für die in orthogonalen Richtungen bewegbaren Supporte vorzusehen, ist der Maschinenrahmen der Erfindung aus einem in sich geschlossenen Kastenprofil herstellbar, das in seinem Zentrum die Ausnehmung für das Rohr aufweist und an seinem Umfang stirnseitig die universell ausgebildeten Führungen für die Supporte trägt. Die Führungen sind alle gleichartig ausgeführt, so daß die Supporte gegeneinander austauschbar sind, einzeln wegnehmbar und später hinzufügbar sind. Dies ist insbesondere dann interessant, wenn der Betreiber der Maschine die Abmessungen der zu trennenden Profile ändern will. Dann kann, beispielsweise durch Ümrüsten der Maschinen mit drei Supporten auf solche mit vier Supporten oder umgekehrt, eine Anpassung vorgenommen werden. Natürlich ist auch der Betrieb mit zwei oder einem Support möglich.

Ebenso wie ein Austausch der Supporte am Maschinenrahmen leicht möglich ist, ist nach einem anderen Merkmal der Erfindung auch vorgesehen, die Fräsköpfe und/oder die Scheibenfräser leicht auswechselbar an den Supporten zu befestigen. Dadurch können in einfachster Weise sehr schnell Scheibenfräser für unterschiedliche (große oder kleine) Profilabmessungen und unterschiedliche Profilquerschnitte zum Einsatz gebracht werden. Die Maschine wird universell verwendbar, was bedeutet, daß mit einer wesentlich geringeren Zahl von Baugrößen und -Typen ein größeres Programm zu trennender Rohre bearbeitet werden kann. Der erfindungsgemäße Maschinenrahmen gestattet auch die Unterbringung der Spannung für das zu trennende Rohr innerhalb des Maschinenrahmens.

Faßt man die Vorteile der Erfindung zusammen, so ist zunächst die Möglichkeit der Bearbeitung der zu trennenden Rohre mit vier Scheibenfräsern gleichzeitig bei einfachster Maschinenkonstruktion und Werkzeugführung zu nennen. Die Auswechselbarkeit der Fräsköpfe garantiert optimale Bearbeitungssituationen bei minimalen bis maximalen Profilquerschnitten. Die spätere Aufrüstung einer Maschine mit zusätzlichen Fräsköpfen bei späterem Kundenwunsch, z. B. wenn das zu trennende Rohrprogramm geändert wurde, ist problemlos möglich. Die Bearbeitung des Rohres mit zwei Scheibenfräsern ist ebenso möglich, wie mit drei oder vier Scheibenfräsern, weil durch die erfindungsgemäßen Bewegungsabläufe der Supporte auf geraden Führungsbahnen stets ein Freischnitt bei engstmöglicher Anordnung der Scheibenfräser möglich ist. Ein Auswechseln der kompletten Fräsköpfe bei besonderen Anforderungen ist problemlos möglich. Die Maschine ermöglicht in ihrer Basisversion auch die Bearbeitung des Rohres mit drei Scheibenfräsern, wobei zwei Scheibenfräser gleichzeitig in zwei rechtwinklig aufeinander stehenden Führungsbahnen und der dritte Scheibenfräser gleichzeitig in X-Y-Achse gesteuert wird. Mit wenigen Baugrößen der Grundmaschine und gleichen Baugruppen kann das gleiche Rohrprogramm bearbeitet werden, für das beim Stand der Technik mit zwei Scheibenfräsern bisher mehrere Maschinentypen mit entsprechend geringerer Leistungsfähigkeit eingesetzt werden mußten.

Ein Ausführungsbeispiel der Erfindung ist in der Zeichnung dargestellt und wird nachfolgend beschrieben. Es zeigt:
- Fig. 1: den konzeptionelle Aufbau einer erfindungsgemäßen Maschine zum Trennen von Rohren,

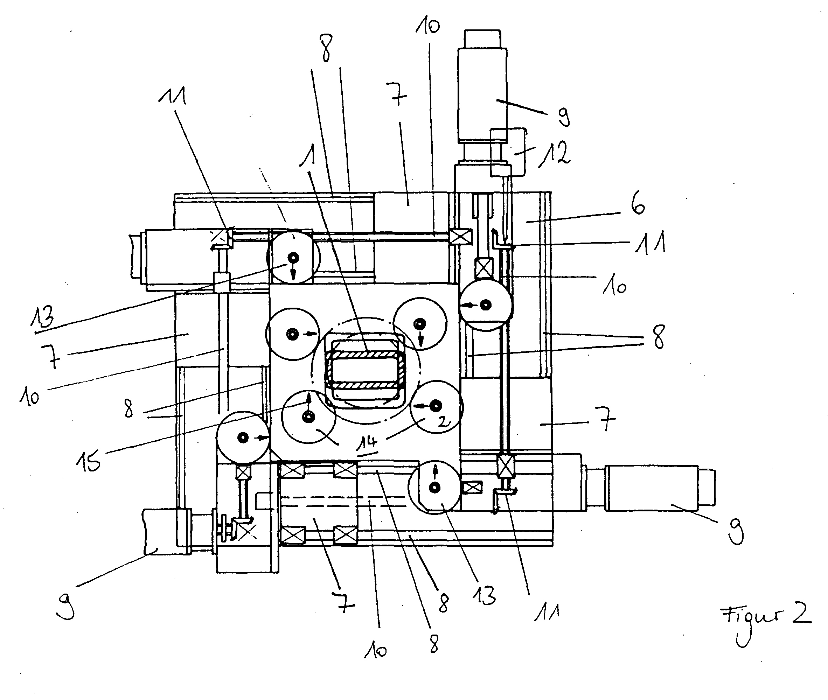

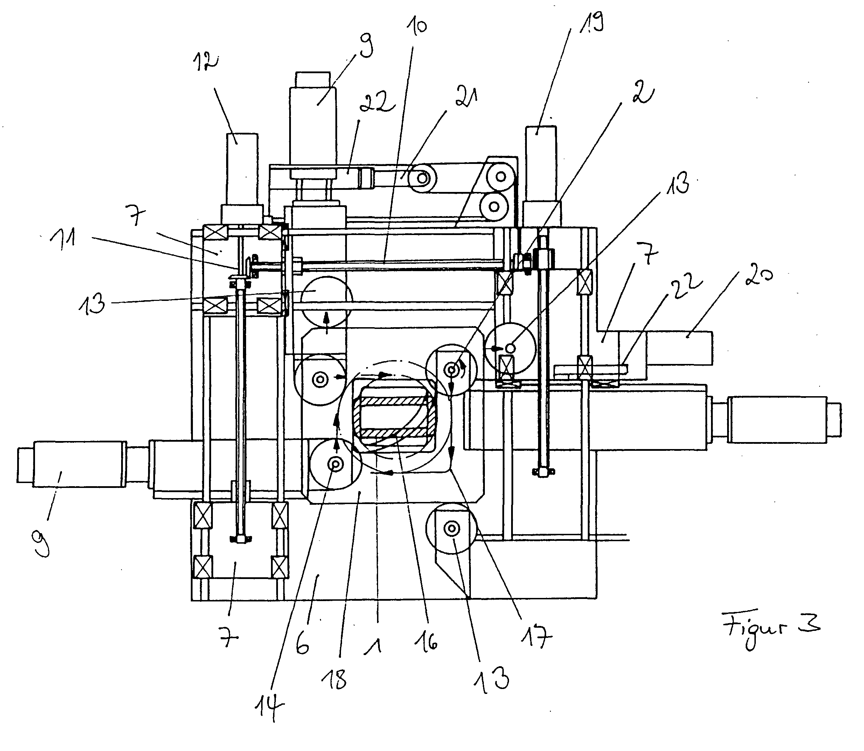

- Fig.2: eine erfindungsgemäße Maschine zum Trennen von Rohren mit vier Scheibenfräsern,
- Fig.3: ein Maschinenkonzept zum Trennen von rechteckigen und quadratischen Vierkantrohren sowie Rohren mit dreieckigem oder rundem Querschnitt und
- Fig.4.: eine alternative Ausbildung der Maschine zum Trennen von Rohren mit im wesentlichen dreieckig ausgeführtem Maschinenrahmen.

Der konzeptionelle Aufbau einer erfindungsgemäßen Maschine zum Trennen von Rohren und deren Funktionsweise ist am besten in der Zeichnungsfigur 1 erkennbar, in der bei Verwendung von vier auf engstem Raum angeordneten Scheibenfräsern 2 deren Verfahrwege 3 beim Trennen des Rohres 1 dargestellt sind. Die einzelnen Scheibenfräser 2 werden jeweils aus einer Ruheposition 4 in ihre Schneidposition 5 verfahren, wobei der Verfahrweg durch Pfeile gekennzeichnet ist. Die Scheibenfräser 2 verfahren gleichzeitig synchron auf linearen Bahnen, wobei die Bewegungsrichtungen (Verfahrwege 3) rechtwinklig zueinander verlaufen. Der verbleibende Freiraum unter 45° zu den jeweiligen Scheibenfräsern 2 in Bewegungsrichtung ermöglicht es, mit den vier Scheibenfräsern 2 zu trennen und aus dem Bearbeitungsbereich herauszufahren, ohne daß die Scheibenfräser 2 sich berühren. Die einzelnen Scheibenfräser 2 sind darüberhinaus quer zu ihrer Verfahrwegen 3 anstellbar, um die Schnittiefe verändern zu können.

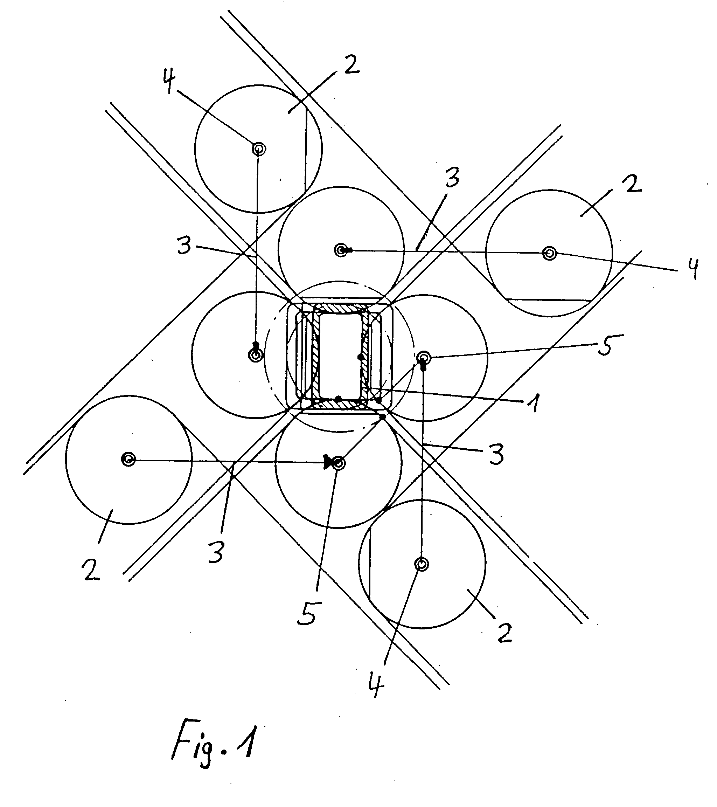

Eine Maschine zum Trennen von Rohren ist grob schematisch in der Zeichnungsfigur 2 dargestellt und wird nachfolgend beschrieben. In dieser Zeichnungsfigur ist der kastenförmige, das Rohr 1 umfassende Maschinenrahmen mit 6 bezeichnet, an dem vier Supporte 7 an Führungsleisten 8 jeweils quer zueinander veschiebbar sind. Jeder Support 7 trägt einen Scheibenfräser 2, der jeweils über jedem Support 7 zugeordnete Antriebsmotore 9 antreibbar ist. Die Verschiebung der Supporte 7 an den Führungsleisten 8 erfolgt über Gewindespindeln 10, die über Kegelradverzahnungen 11 miteinander und mit dem Vorschubmotor 12 verbunden sind. In der Zeichnungsfigur 2 sind die Scheibenfräser 2 in ihrer Ausgangsposition 13 außerhalb des lichten Innenraumprofils des Maschinenrahmens 6 einerseits und in der Anfangsstellung 14 des Trennvorschubes dargestellt. Mit Pfeilen ist jeweils die Bewegungsrichtung 15 der Trennscheiben 2 angegeben, die beim Trennvorschub derjenigen entspricht, die in Figur 1 schematisch dargestellt ist.

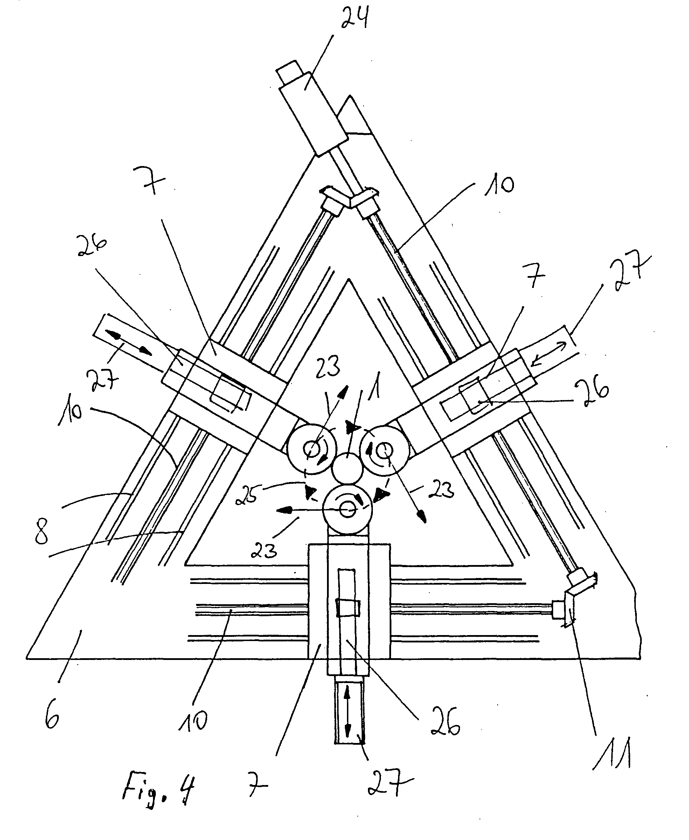

In Figur 3 ist ein Maschinenkonzept dargestellt, das zum Trennen von rechteckigen und quadratischen Rohren 1 sowie Rohren 16 mit dreieckigem oder rundem Querschnitt geeignet ist. Am Maschinenrahmen 6, der ebenfalls kastenförmig ausgebildet ist, sind an Führungsleisten 8 drei Supporte 7 geführt, von denen der eine Support 7 so ausgebildet ist, daß der Scheibenfräser 2 nacheinander und/oder überlagert in zwei aufeinander senkrechten Bewegungsbahnen 17 bewegbar ist. Auch hier sind die Ausgangspositionen (Ruhestellung)13 der Scheibenfräser 2 außerhalb des Lichtraumprofils 18 des Maschinenrahmens 6 dargestellt, sowie die Anfangsstellungen 14 des Trennvorschubes, aus denen heraus die Scheibenfräser 2 zum Trennen des Rohres 16 bewegbar sind. Die Bewegungsbahnen 17 sind durch Pfeile kenntlich gemacht.

Erkennbar sind auch in Figur 3 die Supporte 7 über Gewindespindeln 10 miteinander synchronisiert, jedoch nur zwei Supporte 7 sind über Kegelradverzahnungen 11 getrieblich miteinander verbunden und von einem Vorschubmotor 12 angetrieben. Der dritte Support 7 wird von einem separaten Antriebsmotor 19 (20) ebenfalls über zwei Gewindespindel 21(22) getrieben, die Antriebsmotore 19 (20) sind in ihren Geschwindigkeiten unabhängig vom Vorschubsmotor 12 der anderen Supporte 7 steuerbar. Die Supporte 7 sind über ein Flaschenzugsystem 21 mit einem Druckzylinder 22 verbunden, der für den Gewichtsausgleich in jeder Verschiebestellung des Supportes 7 sorgt.

Eine alternative Ausbildung der Maschine zum Trennen von Rohren 1 ist schematisch in Figur 4 dargestellt; hier ist der Maschinenrahmen 6 im wesentlichen dreieckig ausgeführt, so daß die Führungsleisten 8 für drei Supporte 7 im spitzen Winkel zueinander verlaufen. Die Bewegungsrichtung 23 der Supporte 7, deren Trennscheibenantrieb nicht dargestellt ist, ist mit Pfeilen gekennzeichnet. Zum Verschieben der Supporte 7 und synchronen Bewegen an den Führungsleisten 8 ist ein einziger Antriebsmotor 24 vorgesehen, der die zum Verschieben vorgesehenen Gewindespindeln 10 treibt, die ihrerseits über Kegelradverzahnungen 11 miteinander verbunden sind. Die geradlinigen Bewegungsrichtungen 23 werden durch überlagertes Synchron-Fahren der Vorschubmotore 27 in eine kreisförmige Bewegungsrichtung 25 umgewandelt. Der Antrieb des Vorschubs quer zur Führung 8 erfolgt über Gewindespindeln 26.

### Legende:

- 1: Rohr
- 2: Scheibenfräser
- 3: Verfahrweg (der Scheibenfräser)
- 4: Ruheposition
- 5: Schneidposition
- 6: Maschinenrahmen
- 7: Support
- 8: Führungsleiste
- 9: Antriebsmotor
- 10: Gewindespindel
- 11: Kegelradverzahnung
- 12: Vorschubmotor
- 13: Ausgangssposition der Scheibenfräser,
- 14: Anfangsstellung des Trennvorschubes
- 15: Bewegungsrichtung der Trennscheibe
- 16: Rohre mit dreieckigem oder rundem Querschnitt
- 17: Bewegungsbahnen
- 18: Lichtraumprofil
- 19: Antriebsmotor
- 20: Antriebsmotor
- 21: Flaschenzugsystem
- 22: Druckzylinder
- 23: Bewegungsrichtung der Supporte
- 24: Antriebsmotor
- 25: kreisförmige Bewegungsrichtung
- 26: Gewindespindel
- 27: Vorschubmotor

## Patentansprüche

1. Maschine zum Trennen von Rohren, mit einem das Rohr (1) umgreifenden Maschinenrahmen (6) an dem in einer quer zur Rohrlängsachse verlaufenden Ebenen Supporte (7) geradlinigen geführt sind, an denen Werkzeugköpfe mit jeweils einem Kreissägeblatt (2) gelagert sind, wobei die Kreissägeblätter (2) in einer gemeinsamen Schneidebene drehangetrieben sind und durch gesteuerte Verschiebung der Supporte (7) in ihren Achsrichtungen das Rohr (1) durchtrennen, wobei jedes Kreissägeblatt (2) einen Abschnitt der Wandquerschnittsfläche des Rohres (1) trennt, sowie mit in der Nähe der Kreissägeblätter (2) angeordneten Spannvorrichtungen zum Fixieren des Rohres (1) während des Trennvorganges,
dadurch gekennzeichnet,
daß an dem Maschinenrahmen (6) mindestens drei Supporte (7) in jeweils zwei aufeinander senkrecht stehenden Achsrichtungen gesteuert und bezogen auf den Umfang des Rohres in gleicher Bewegungsrichtung verschiebbar um das zu trennende Rohr (1,16) verteilt angeordnet sind und mindestens zwei Supporte (7) während des Trennvorganges ausschließlich geradlinig angetrieben sind.

2. Maschine zum Trennen von Rohren nach Anspruch 1,
dadurch gekennzeichnet,
daß die geradlinig angetriebenen Supporte (7) mit konstanter Geschwindigkeit und synchron verfahrbar sind.

3. Maschine zum Trennen von Rohren nach Anspruch 1 und 2,
dadurch gekennzeichnet,
daß vier Supporte (7) vorgesehen sind, die am Maschinenrahmen (6) geführt in der ersten Achsrichtung gegen das Rohr (1,16) anstellbar und in der zweiten Achsrichtung in Trennvorschubrichtung (Verfahrweg 3) verfahrbar sind, wobei die zweiten Achsrichtungen benachbarter Supporte (7) zueinander rechtwinklig verlaufen.

4. Maschine zum Trennen von Rohren nach Anspruch 1 bis 3,
dadurch gekennzeichnet,
daß die den Trennvorschub (Verfahrweg 3) bewirkenden Vorschubmotor 12 mindestens paarweise synchron gekoppelt sind

5. Maschine zum Trennen von Rohren nach Anspruch 1 und 2,
dadurch gekennzeichnet,
daß drei Supporte (7) vorgesehen sind, die am Maschinenrahmen (6) geführt in der ersten Achsrichtung gegen das Rohr (1,16) anstellbar und in der zweiten Achsrichtung in Trennvorschubrichtung (Verfahrweg 3) verfahrbar sind, wobei die zweiten Achsrichtungen mindestens zweier benachbarter Supporte (7) zueinander rechtwinklig verlaufen und mindestens der dritte Support (7) durch zeitweise gesteuerte Überlagerung seiner Bewegungen in den beiden Achsrichtungen auf einer von der Geraden abweichenden Bewegungsbahn (17) bewegbar ist.

6. Maschine zum Trennen von Rohren, mit einem das Rohr (1) umgreifenden Maschinenrahmen (6) an dem in einer quer zur Rohrlängsachse verlaufenden Ebenen Supporte (7) geradlinigen geführt sind, an denen Werkzeugköpfe mit jeweils einem Kreissägeblatt (2) gelagert sind, wobei die Kreissägeblätter (2) in einer gemeinsamen Schneidebene drehangetrieben sind und durch gesteuerte Verschiebung der Supporte (7) in ihren Achsrichtungen das Rohr (1) durchtrennen, wobei jedes Kreissägeblatt (2) einen Abschnitt der Wandquerschnittsfläche des Rohres (1) trennt, sowie mit in der Nähe der Kreissägeblätter (2) angeordneten Spannvorrichtungen zum Fixieren des Rohres (1) während des Trennvorganges,
dadurch gekennzeichnet,
daß drei Supporte (7) vorgesehen sind die am Maschinenrahmen (6) geführt in der ersten Achsrichtung gegen das Rohr (1,16) anstellbar und in der zweiten Achsrichtung in Trennvorschubrichtung synchron verfahrbar sind, wobei die zweiten Achsrichtungen benachbarter Supporte (7) zueinander im spitzen Winkel verlaufen und der die Supporte (7) führende Maschinenrahmen (6) im wesentlichen dreieckig ausgebildet ist.

7. Maschine zum Trennen von Rohren nach Anspruch 1 bis 6,
dadurch gekennzeichnet,
daß für alle oder Gruppen von Supporten (7) ein gemeinsamer Antriebsmotor (24) vorgesehen ist, der über Kegelradverzahnungen (11) einen synchronen Trennvorschub bewirkt.

8. Maschine zum Trennen von Rohren nach Anspruch 1 bis 6,
dadurch gekennzeichnet,
daß für alle oder Gruppen von Supporten (7) Einzelantriebe vorgesehen sind, die elektrisch gekoppelt einen synchronen Trennvorschub bewirkt.

9. Maschine zum Trennen von Rohren nach Anspruch 1 bis'7,
dadurch gekennzeichnet,
daß als Koppelgetriebe Kugelrollspindeln mit Kegelradverzahnungen (11) vorgesehen sind.

10. Maschine zum Trennen von Rohren nach Anspruch 1 bis 9,
dadurch gekennzeichnet,
daß der Maschinenrahmen (6) kastenartig kompakt ausgebildet ist und zum Austausch und Anbau baugleich ausgeführter Supporte (7) vorbereitet ist.

11. Maschine zum Trennen von Rohren nach Anspruch 1 bis 10,
dadurch gekennzeichnet,
daß die Kreissägeblätter (2) leicht auswechselbar an den Supporten (7) befestigt sind.

## Claims

1. Machine for cutting up tubes, having a machine frame (6) which grasps the tube (1) and on which supports (7) are guided rectilinearly in a plane transverse to the tube longitudinal axis, on which supports tool heads with a respective circular saw blade (2) are mounted, wherein the circular saw blades (2) are driven in rotation in a common cutting plane and by controlled displacement of the supports (7) separate the tube in their axial directions, wherein each circular saw blade (2) cuts off a section of the wall cross-section face of the tube (1), and having clamping devices disposed near the circular saw blades (2) for fixing the tube (1) during the cutting operation, characterised in that at least three supports (7) controlled in respectively two perpendicular axial directions are distributed around the tube (1, 16) to be cut displaceably in the same direction of motion with respect to the circumference of the tube, and at least two supports (7) are driven only rectilinearly during the cutting operation.

2. Machine for cutting up tubes according to claim 1, characterised in that the rectilinearly driven supports (7) are displaceable synchronously at a constant speed.

3. Machine for cutting up tubes according to claim 1 and 2, characterised in that four supports (7) are provided, which, guided on the machine frame (6), can be applied to the tube (1, 16) in the first axial direction and in the second axial direction are displaceable in the cutting forward feed direction (displacement path 3), wherein the second axial directions of adjacent supports (7) extend at right angles to one another.

4. Machine for cutting up tubes according to claim 1 to 3, characterised in that the forward feed motors 12 effecting forward feed (displacement path 3) are synchronously coupled at least in pairs.

5. Machine for cutting up tubes according to claim 1 and 2, characterised in that three supports (7) are provided, which, guided on the machine frame (6), can be applied to the tube (1, 16) in the first axial direction and in the second axial direction are displaceable in the cutting forward feed direction (displacement path 3), wherein the second axial directions of at least two adjacent supports (7) extend at right angles to one another and at least the third support (7) is movable along a path of motion (17) deviating from the straight line by periodically controlled overriding of its movements in the two axial directions.

6. Machine for cutting up tubes, having a machine frame (6) which grasps the tube (1) and on which supports (7) are guided rectilinearly in a plane transverse to the tube longitudinal axis, on which supports tool heads with a respective circular saw blade (2) are mounted, wherein the circular saw blades (2) are driven in rotation in a common cutting plane and by controlled displacement of the supports (7) separate the tube in their axial directions, wherein each circular saw blade (2) cuts off a section of the wall cross-section face of the tube (1), and having clamping devices disposed near the circular saw blades (2) for fixing the tube (1) during the cutting operation, characterised in that at least three supports (7) are provided, which, guided on the machine frame (6), can be applied to the tube (1, 16) in the first axial direction and in the second axial direction are displaceable synchronously in the cutting forward feed direction, and the second axial directions of adjacent supports (7) extend at an acute angle to one another and the machine frame (6) guiding the supports (7) is formed substantially as a triangle.

7. Machine for cutting up tubes according to claim 1 to 6, characterised in that for all or groups of supports (7) a common drive motor (24) is provided, which effects a synchronous cutting forward feed via bevel gear splining (11).

8. Machine for cutting up tubes according to claim 1 to 6, characterised in that for all or groups of supports (7) individual drives are provided, which, electrically coupled, effect a synchronous cutting forward feed.

9. Machine for cutting up tubes according to claim 1 to 7, characterised in that as coupling mechanisms, ball roll spindles with bevel gear splining (11) are provided.

10. Machine for cutting up tubes according to claim 1 to 9, characterised in that the machine frame (6) is formed in a compact manner as a box, and is prepared for the exchange and addition of structurally identical supports (7).

11. Machine for cutting up tubes according to claim 1 to 10, characterised in that the circular saw blades (2) are fixed to the supports (7) in such a manner as to be easily exchanged.

## Revendications

1. Machine pour tronçonner des tubes, comportant un bâti de machine (6) entourant le tube (1), sur lequel sont guidés de façon rectiligne, dans un plan s'étendant transversalement à l'axe longitudinal du tube, des supports (7) sur lesquels sont montés des têtes d'outil ayant à chaque fois une lame de scie circulaire (2), les lames de scie circulaire (2) étant entraînées en rotation dans un plan de coupe commun et tronçonnant le tube (1) dans ses directions axiales par déplacement commandé des supports (7), chaque lame de scie circulaire (2) coupant un tronçon de la surface de section transversale de paroi du tube (1), ainsi que des dispositifs de serrage agencés à proximité des lames de scie circulaire (2) pour fixer le tube (1) pendant le processus de tronçonnage,
caractérisée en ce que, sur le bâti de machine (6), au moins trois supports (7) sont agencés de façon répartie autour du tube (1, 16) à tronçonner en étant déplaçables relativement à la périphérie du tube dans la même direction de mouvement et en étant commandés à chaque fois dans deux directions axiales perpendiculaires l'une par rapport à l'autre, et au moins deux supports (7) sont entraînés exclusivement de façon rectiligne pendant le processus de tronçonnage.

2. Machine pour tronçonner des tubes selon la revendication 1,
caractérisée en ce que les supports (7) entraînés de façon rectiligne sont déplaçables à vitesse constante et de façon synchrone.

3. Machine pour tronçonner des tubes selon les revendications 1 et 2,
caractérisée en ce que quatre supports (7) sont prévus, qui, guidés sur le bâti de machine (6), peuvent être appliqués dans la première direction axiale contre le tube (1, 16) et peuvent être déplacés, dans la seconde direction axiale, dans la direction d'avance de tronçonnage (trajet de déplacement 3), les deux directions axiales de supports voisins (7) s'étendant à angle droit l'une par rapport à l'autre.

4. Machine pour tronçonner des tubes selon les revendications 1 à 3,
caractérisée en ce que les moteurs d'avance (12) permettant l'avance du tronçonnage (trajet de déplacement 3) sont couplés au moins par paire de façon synchrone.

5. Machine pour tronçonner des tubes selon les revendications 1 et 2,
caractérisée en ce que trois supports (7) sont prévus, qui, guidés sur le bâti de machine (6), peuvent être appliqués dans la première direction axiale contre le tube (1, 16) et être déplacés, dans la seconde direction axiale, dans la direction d'avance du tronçonnage (trajet de déplacement 3), les deux directions axiales d'au moins deux supports voisins (7) s'étendant à angle droit l'une par rapport à l'autre et au moins le troisième support (7) pouvant être déplacé par superposition commandée temporaire de ses déplacements dans les deux directions axiales sur une voie de déplacement (17) s'écartant de la ligne droite.

6. Machine pour tronçonner des tubes, comportant un bâti de machine (6) entourant le tube (1), sur lequel sont guidés de façon rectiligne, dans un plan s'étendant transversalement à l'axe longitudinal du tube, des supports (7) sur lesquels sont montés des têtes d'outil ayant à chaque fois une lame de scie circulaire (2), les lames de scie circulaire (2) étant entraînées en rotation dans un plan de coupe commun et tronçonnant le tube (1) dans ses directions axiales par déplacement commandé des supports (7), chaque lame de scie circulaire (2) coupant un tronçon de la surface de section transversale de paroi du tube (1), ainsi que des dispositifs de serrage agencés à proximité des lames de scie circulaire (2) pour fixer le tube (1) pendant le processus de tronçonnage,
caractérisée en ce que trois supports (7) sont prévus, qui, guidés sur le bâti de machine (6), peuvent être appliqués dans la première direction axiale contre le tube (1, 16) et sont déplaçables de façon synchrone dans la seconde direction axiale dans la direction d'avance du tronçonnage, les deux directions axiales de supports voisins (7) s'étendant l'une par rapport à l'autre sous un angle aigu et le bâti de machine (6) guidant les supports (7) étant réalisé de façon généralement triangulaire.

7. Machine pour tronçonner des tubes selon les revendications 1 à 6,
caractérisée en ce que, pour tous ou des groupes de supports (7), il est prévu un moteur d'entraînement commun (24) qui, par l'intermédiaire d'engrenages à pignons coniques (11), permet une avance du tronçonnage synchrone.

8. Machine pour tronçonner des tubes selon les revendications 1 à 6,
caractérisée en ce que, pour tous ou des groupes de supports (7), sont prévus des entraînements individuels qui permettent, en étant couplés électriquement, une avance du tronçonnage synchrone.

9. Machine pour tronçonner des tubes selon les revendications 1 à 7,
caractérisée en ce que, comme mécanisme de couplage, sont prévues des broches filetées à billes ayant des engrenages à pignons coniques (11).

10. Machine pour tronçonner des tubes selon les revendications 1 à 9,
caractérisée en ce que le bâti de machine (6) est réalisé de façon compacte du type caisson et est préparé pour l'échange et le montage de supports (7) de même construction.

11. Machine pour tronçonner des tubes selon les revendications 1 à 10,
caractérisée en ce que les lames de scie circulaire (2) sont fixées en étant facilement interchangeables sur les supports (7).
